# EUROPEAN PATENT SPECIFICATION

(11) **EP 4 074 496 B1**
(45) Date of publication and mention of the grant of the patent: **13.08.2025**
(21) Application number: 21382323.0
(22) Date of filing: 16.04.2021
(51) Int. Cl.: B29C 70/38, B29C 70/32, B29C 33/44, B29C 53/62, B29L 31/30

(54) **DEVICE AND METHOD FOR MANUFACTURING COMPOSITE PARTS AND AIRCRAFT BULKHEAD MANUFACTURED WITH SUCH METHOD**
VORRICHTUNG UND VERFAHREN ZUR HERSTELLUNG VON VERBUNDMATERIALTEILEN UND MIT EINEM SOLCHEN VERFAHREN HERGESTELLTER FLUGZEUGRUMPFSPANT
DISPOSITIF ET PROCÉDÉ DE FABRICATION DE PIÈCES COMPOSITES ET CLOISON D'AÉRONEF FABRIQUÉE SELON CE PROCÉDÉ

(43) Date of publication of application: 19.10.2022
(73) Proprietor: Airbus Operations, S.L.U., 28906 Getafe (ES)
(72) Inventor: NOGUEROLES VIÑES, Pedro, 28906 Getafe (ES); ARANA HIDALGO, Alberto, 28906 Madrid (ES)

(56) References cited:
- EP-A2- 0 783 959
- DE-A1- 102010 039 955
- DE-C1- 19 503 939
- US-A1- 2014 342 028
- US-A1- 2015 360 423

## Description

The invention relates to a device for manufacturing composite parts, as well as to a method for manufacturing composite parts. The invention also relates to aircraft bulkheads manufactured with such method.

The bulkhead of an aircraft is both a very large part and a part which receive high loads as it separates a pressurized area from a non-pressurized area. Thereby its attachments to the fuselage frame are very important for the transmission of loads from the bulkhead to the frame. But such attachments are bulky and require a high amount of work.

Replacing composite bulkheads for aircrafts and their assembly to the fuselage by a one-piece composite bulkhead has been considered. For example the document US 5,062,589 discloses a bulkhead which has a structure adapted to merge smoothly with the geometry of the aircraft. The bulkhead described in this document is made of fiber reinforced material. However, the document does not describe an efficient manufacturing device or method to obtain such bulkhead.

Manufacturing cost are relevant to make some technology accessible to everyone. The costs of manufacturing are partly related to the space that the machinery and operators need to manufacture an object. Thereby any reduction in the space needed to manufacture an object will reduce its manufacturing cost.

Moreover, using a same device to manufacture multiple parts always results in lower manufacturing costs for these parts, in particular if such tool provides the opportunity to manufacture multiple parts at once. This is particularly the case in a high production rate industry.

The document DE102010039955 describes a device in which a first wing mold and a second wing mold are mounted on the same rotating frame. However their disposition does not allow to optimize the efficiency of production units placed in proximity of the molds. Also, each production unit needs to be programmed and/or controlled independently.

US2015360423 also describes a machine in which two molds are mounted on a same frame. However, in such a machine, although the molds are mounted on the same frame, everything happens as if they were two separate assembly lines for parts, except that they share an applicator head. No particular efficiency of space use or manufacturing cost is achieved with such a machine.

The invention aims to propose a method and device that allow the manufacturing of complex composite parts in a particularly efficient manner.

The invention aims to reduce the cost of manufacturing composite parts.

The invention also aims to propose an aircraft bulkhead manufactured with a method of the invention.

The invention also proposes a method of manufacturing that provides repeatability on a high number of composite parts.

The invention proposes a device for manufacturing composite parts according to claim 1.

In the whole text, the term 'functional surface' is used to designate a portion of a mold's surface that can be used to placed components of a composite part to be manufactured on the mold. Indeed, the whole surface of the mold may not be used to form a part as some portions of the mold may be dedicated to others functions such as for example attaching the mold to the frame.

In the whole text when the terms "mold(s)" or "robotic device(s)" are mentioned, the characteristics described may apply to any of the first mold and second mold and respectively to any of the first robotic device and second robotic device.

Similarly, the first mold and second mold are mounted arranged in a central symmetric position around a symmetry central point, means that the first mold and second mold are mounted such that their respective functional surfaces are arranged in a central symmetric position around a symmetry central point.

A device according to the invention allows to manufacture two composite parts at the same time in a very simple, effective and compact manner. Thereby the costs of manufacturing such parts may be driven down.

The frame may be adapted to at least rotate the first mold and the second mold simultaneously, around at least one axis.

The frame is particularly adapted to maintain the first mold and the second mold in their central symmetric relation at any moment. The relative position of the first mold and the second mold is thus maintained such that operations for forming composite parts on the molds may continue to be carried on in parallel.

The frame may be adapted to rotate the first mold and the second mold simultaneously around multiple axis.

The frame may include some engines to pivot the first mold and the second mold, as well as mechanical joints such as pivots or ball joints for example.

The rotation of the first mold and the second mold may provide access to some portions of their functional surface to an operator or to a robotic device for example for placing additional components or for inspecting the molds or the composite parts. The rotation of the first mold and the second mold may also provide for a fast and effective way to add and assemble components so as to form composite parts; for example when the robotic devices pick up a new component to be added to the composite parts, the molds may rotate meanwhile to be in the best position for the robotic devices once they approach the mold with the new component.

Moreover the dimensioning of the frame may be reduced as the weight of the first mold on a first side of the frame and pivoting in a first direction will compensate the weight of the second mold on a second opposite side of the frame. Thereby the engines used to pivot the frame need not be to overcome the weight of a single mold.

The frame may also be adapted to translate the molds along one or more directions. The molds may thus be displaced from a first assembly station to a second assembly station, such that an assembly line manufacturing model may be implemented.

The molds may be disassembled from the frame so that they may be handled separately in the production line.

The first robotic device and the second robotic device are adapted to perform the same operations simultaneously with a central symmetry relationship around the symmetry central point.

The first robotic device and the second robotic device are adapted to perform operations in a centro-symmetrical coordinated manner.

Such device thereby allows to manufacture two composite parts simultaneously on one same frame.

The programming of such robotic devices is contemplated to be rather simple with the mirroring of the actions of the first robotic device on the second robotic device around the symmetry central point.

A device according to the invention is adapted to place a second component on the second mold identical to a first component placed on the first mold. In some embodiments, the first robotic device and the second robotic device may be identical. Thereby two identical parts may be obtained simultaneously.

The first robotic device and the second robotic device may be adapted to move in relation to the frame.

The frame may displace the first mold and the second mold in relation to the first robotic device and the second robotic device, but the first robotic device and the second robotic device may also move in relation to the frame and thus in relation to the first mold and the second mold. In some embodiments, both the frame and the robotic devices may be mobile, so as to ensure a quick and efficient assembly of the composite parts. Having both a mobile frame and mobile robotic devices allow to place composite components in every area of the functional surfaces of the molds, even when such functional areas are complex.

The first robotic device and the second robotic device may each comprise a composite tape laying device.

Composite tapes laying is a manufacturing method whereby the components placed on the molds are tapes of a composite material. In the present description, the tape laying method will be considered to also include the so-called "patch placement" method. The complete composite part is made of multiple tapes. The tapes may for example be pieces of fibers impregnated with a resin. The whole composite part may thereafter be cured.

The first robotic device and the second robotic device may each comprise a robotic arm.

A robotic arm provides benefits in the present invention as it is a very flexible robotic device which may easily be reprogrammed for different molds shapes, and which can achieve complex movements to pick up components from multiple places and place them at different locations on the mold's functional surface.

The robotic arm may comprise one or more interchangeable tools. In particular a composite tape laying device may be mounted on the robotic arm.

The first robotic device and the second robotic device may be adapted to seize and place a rigid component on one of the molds. Thereby the composite part manufactured with a device according to the invention may be made of multiple components of different nature. More particularly the invention allows to obtain a complex composite part comprising reinforcing components embedded in a composite (such as CFRP (carbon-reinforced polymer) for example). This allows to place pre-formed parts, for example of the same or similar material as the reinforcements, or pre-cured composite parts adapting to the previously layed-up material.

The first mold and the second mold may have a convex functional surface.

The functional surface of each mold is beneficially oriented towards the outside so as to allow for an easy placement of composite parts on the molds.

In some embodiments, for which the invention has been identified to be particularly beneficial, the first mold and the second mold are adapted to form composite bulkheads of an aircraft.

The first mold and the second mold may be adapted to form a bulkhead for an aircraft's fuselage.

Moreover, in a device according to the invention:
- the functional surface of the first mold may have a circumferential portion with a curvature radius smaller than a curvature radius of a central portion,
- the frame and the first robotic device may be adapted to lay composite tapes circumferentially on the circumferential portion of the first mold.

Symmetrically,
- the functional surface of the second mold has a circumferential portion with a curvature radius smaller than a curvature radius than in a central portion,
- the frame and the second robotic device are adapted to lay composite tapes around the circumferentially on the circumferential portion of the second mold.

The robotic device and the frame are adapted to lay composite tapes radially and/or circumferentially and/or any combination of circumferential and radial direction on a mold with a generally revolution symmetrical shape. In this particular case, it is highlighted that a device according to the invention allows to lay tapes circumferentially to a revolution symmetry axis of the mold, that is to say "around" said symmetry axis. Such a property of the device allows to properly reinforce the outer rim of a one-piece bulkhead which has a small curvature radius (high curvature) to be attached to a fuselage with as few intermediate parts as possible.

The first robotic device and the second robotic device may be adapted to lay composite tapes having a width comprised between 0.7 and 7 centimeters.

More particularly, the first robotic device and the second robotic device are adapted to lay composite tapes having a width comprised between 1.5 and 5 centimeters.

Such width of the composite tapes (or tow) allow to manufacture composite parts with a small curvature radius. In particular, it allows to place composite tapes in the circumferential portion of the molds.

The first robotic device and the second robotic device may be adapted to lay composite tapes respectively on the first mold and second mold, then at least one reinforcing component of a different nature than the composite tapes respectively on the first mold and second mold, and then composite tapes at least partially over said at least one reinforcing component respectively on the first mold and second mold.

The first robotic device and second robotic device are in particular adapted to switch from a tape laying device to another tool type to lay the reinforcing component. The reinforcing component may thus be embedded between two composite laminate, so as to form an integral composite part in one-piece.

The reinforcing component may be of a different nature than the composite. In particular it may be made of a rigid or semi-rigid plastic or metallic alloy.

A device according to the invention allows to place an inner layer of composite tapes circumferentially around a mold, then multiple discrete reinforcing components around the mold circumference, and then an outer layer of composite tapes, at least partially over the reinforcing components.

A device and method according to the invention allows to manufacture a one-piece bulkhead for an aircraft fuselage. Indeed, fabricating the bulkhead directly on a mold with automated placement of components allows to manufacture not only the central portion with a high curvature radius of convexity (so that the bulkhead is as flat as possible) of the bulkhead, but also the flanges of the bulkhead which have a small curvature radius to join the bulkhead to the fuselage. Rotating the mold and/or the robotic device allow to place components of the composite bulkhead all around the functional surface so as to obtain the one-piece bulkhead. Such bulkhead, in one piece, is relatively quick to manufacture with a method of the invention. Moreover, having a one-piece composite bulkhead instead of a bulkhead resulting from the assembly of multiple parts such as gussets, ring frame, bulkhead central portion, etc. allows to limit its manufacturing time to a minimum.

Moreover, fabricating two symmetrically identical composite bulkhead simultaneously on a same frame due to the fact that a device according to the invention limits the manufacturing price of such composite bulkhead.

The invention also extends to a method for the manufacturing of composite parts comprising:
- placing a first component of a first composite part on a first mold with a first robotic device,
characterized in that it also comprises:
- placing a second component of a second composite part on a second mold with a second robotic device:
   - said second mold having a functional surface identical to a functional surface of the first mold, and said first mold and second mold both being mounted on a same frame in a central symmetric arrangement around a symmetry central point,
   - symmetrically to the application of the first component on the first mold, around the symmetry central point.

The molds and the first robotic device and second robotic device may be moving simultaneously and/or in a sequential manner.

In a device and method according to the invention, the components placed on the molds may be tacky. Thereby their application on the molds is facilitated as they may not move from the position at which they have been placed on the molds during subsequent step such as the placement of further components. The tackiness of the component may be:
- inherent to the component, for example a pre-impregnated CFRP component is tacky,
- obtained by applying some sort of adhesive to the component or to the mold's functional surface before placing the component.

In some instances, not every component needs to be tacky. Indeed if one or more tacky components, such as the above example of a pre-impregnated CFRP component, have been previously placed on the mold, following components need not be tacky because the surface formed by the previous components and on which the following components will be placed is already tacky.

A first component placed by the first robotic device on the first mold and a second component placed by the second robotic device simultaneously on the second mold may be identical.

In particular a first component and a second component, respectively placed by the first robotic device on the first mold and simultaneously by the second robotic device to the second mold, are identical. Thereby two composite parts may be manufactured simultaneously, identical, and in a coordinated manner.

The second robotic device may be programmed so as to mirror the actions of the first robotic device around the symmetry central point, so as to place the second component on the second mold in a central symmetrical arrangement around the symmetry central point to the application of the first component by the first robotic device on the first mold.

Alternatively, the second robotic device may be arranged in a central symmetry to the first robotic device around said symmetry central point, such that each robotic device may be controlled by the same program. For example, if the first robotic device were installed on the ground, the second robotic device may be installed upside down on a ceiling.

In other embodiments, the first robotic device and the second robotic device may each be placing a specific type of component of the composite part. The first robotic device may therefore place one or more component of a first type on the first mold, while the second robotic device applies one or more component of a second type of the second mold. The molds are then rotated such that the first robotic device may therefore place one or more component of a first type on the second mold and/or the second robotic device may place one or more component of a second type of the second mold.

A method of the invention may be a method for manufacturing an integral bulkhead for an aircraft's fuselage.

The inventors have determined that such method is particularly beneficial to manufacture a composite aircraft bulkhead, in particular an integral bulkhead that is a bulkhead in one-piece which requires much less intermediate parts to be attached to a fuselage. Indeed such composite part may be manufactured with a method of the invention, as it has a generally convex shape particularly adapted for mounting two molds a in a central symmetry relationship around a pivot or other joint types.

The invention therefore also extends to an aircraft bulkhead obtained by a method of the invention.

The invention also extends to other possible combinations of features described in the above description and in the following description relative to the figures. In particular, the invention extends to methods for manufacturing composite parts and aircraft bulkheads comprising features described in relation to the device for manufacturing composite parts; the invention extends to devices for manufacturing composite parts comprising features described in relation to the method for manufacturing composite parts; and the invention extends to aircraft bulkheads comprising features described in relation to the device for manufacturing composite parts and to the method for manufacturing composite parts.

Some specific exemplary embodiments and aspects of the invention are described in the following description in reference to the accompanying figures.
Figure 1 is a schematic representation of a lateral view of an embodiment of a device for manufacturing composite parts according to the invention.
Figure 2 is a schematic representation of a perspective view of the device represented in figure 1.
Figure 3 is a schematic exploded view of a bulkhead for an aircraft that may be manufactured with a device and/or method of the invention.
Figure 4 is a schematic representation of a method according to the invention.
Figure 5a is a schematic representation of a cross-section view of a one-piece bulkhead that may be obtained with a method of the invention.
Figure 5b is a schematic representation of a cross-section view of a detail of an attachment of a bulkhead of figure 5a to an aircraft fuselage.
Figure 6a is a schematic representation of a cross-section view of a bulkhead of the prior art.
Figure 6b is a schematic representation of a cross-section view of a detail of an attachment of a bulkhead of the prior art according to figure 6a to an aircraft fuselage.

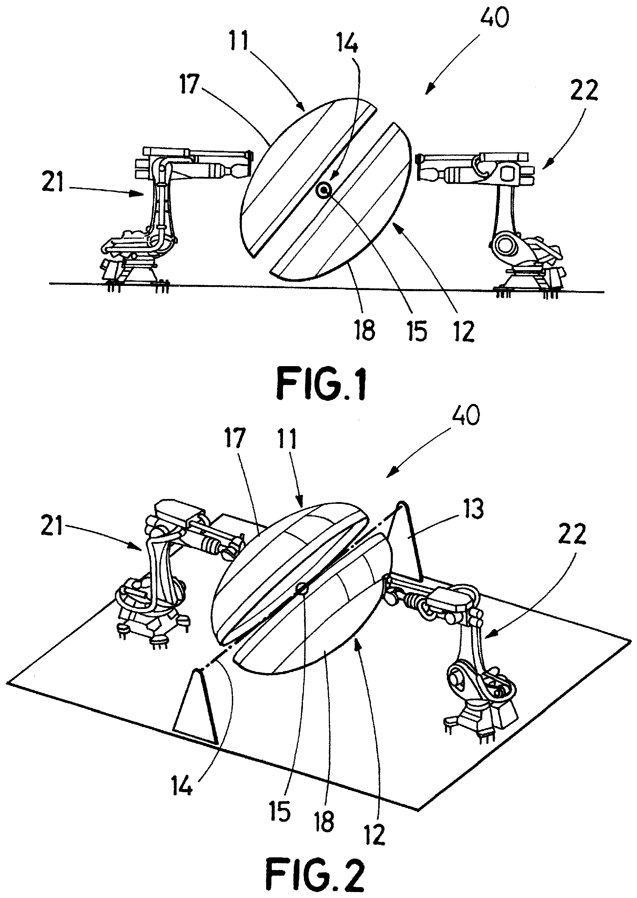

In Figures 1 and 2, an embodiment of a device 40 according to the invention is represented. It comprises a first mold 11 and a second mold 12. The first mold 11 and the second mold 12 are mounted on a pivot of a frame 13. The pivot has an axis 14 passing between the first mold 11 and the second mold 12. The first mold 11 and the second mold 12 are identical in shape. More particularly the functional surface 17 of the first mold 11 is identical to the function surface of the second mold 12. In the embodiment shown on figures 1 and 2, the functional surface 17, 18 of the first mold 11 and the second mold 12 correspond to the external, convex surface of the first mold 11 and the second mold 12. The first mold 11 and the second mold 12 are placed in a central symmetry relationship around a central point 15.

In this embodiment, the first mold 11 and the second mold 12 are adapted to form a bulkhead of an aircraft. For example this may be a bulkhead separating a rear fuselage of a commercial aircraft from a fuselage section for receiving cargo and/or passengers.

Moreover, the device comprises a first robotic device 21 and a second robotic device 22.

The first robotic device 21 and the second robotic device 22 are fixed at one extremity to a same referential as the frame 13. In the present embodiment, the referential may be a solid ground. The first robotic device 21 is placed on the side of the first mold 11 with respect to the pivot axis 14. The second robotic device 22 is placed on the side of the second mold 12 with respect to the pivot axis 14. More particularly the first robotic device 21 and the second robotic device 22 are placed such that they may place composite elements respectively on the functional surface 17 of the first mold 11 and on the functional surface 18 of the second mold 12.

Also the pivot 14 may allow to rotate the first mold 11 and the second mold 12 so as to place the first mold 11 in a position adapted for the second robotic device 22 to place components on its functional surface 17, and the second mold 12 in a position adapted for the first robotic device 21 to place components on its functional surface 18; that is the position of the first mold and the second mold are inverted with respect to a plane passing between the molds.

In this embodiment, the first robotic device 21 and the second robotic device 22 are industrial robotic arms such 6-axis articulated robotic arms. Each of the first robotic device 21 and the second robotic device 22 are equipped with a composite tape laying device as a tool at their functional extremity. Each of the first robotic device 21 and the second robotic device 22 are thus adapted to lay composite tapes on the first mold 11 and the second mold 12.

The first robotic device 21 and the second robotic device 22 are programmed so as to place composite elements - such as composite tapes for example - on the first mold 11 and the second mold 12 simultaneously. More particularly, the first robotic device 21 and the second robotic device 22 are programmed and controlled to place identical composite components simultaneously, respectively on the first mold 11 and the second mold 12, at symmetrical positions on said molds 11, 12 with respect to the symmetry central point 15.

Such device allows to manufacture two identical aircraft's bulkheads simultaneously in a very efficient and replicable manner.

In an alternative embodiment of the invention, the first mold 11 and the second mold 12 may be mounted pivoting on the frame 13 around an axis different from the pivot axis 14 of figure 1 and figure 2. The first mold 11 and the second mold 12 may be mounted pivoting around an axis parallel or collinear to a rotational symmetry axis 35 of the first mold 11 and the second mold 12. This pivoting axis would be orthogonal to a plane passing between the first mold 11 and the second mold 12. Any section of the first mold 11 and the second mold 12 may thus be presented at a low point, a high point or a lateral point of the assembly by a simple rotation around such pivoting axis. This also allows to place, manually or by a robotic device, a continuous tape around a circumference of a mold 11, 12, or in a helical manner on the mold 11, 12, etc..

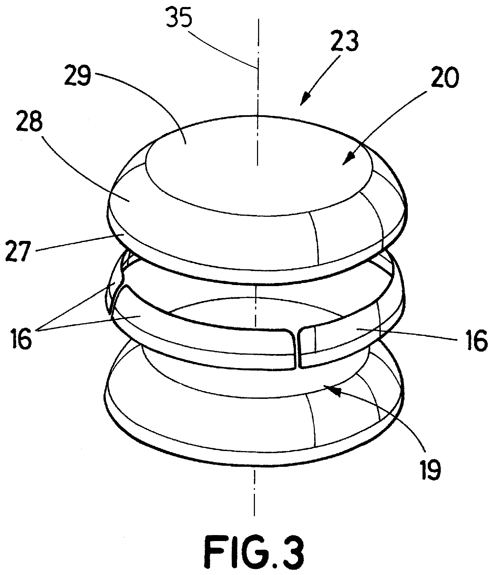

In figure 3, an exploded view of an exemplary embodiment of an aircraft bulkhead 23 that can be manufactured with a device and a method according to the invention is schematically represented. The bulkhead 23 comprises an inner first composite layer 19, reinforcing components 16, and an outer second composite layer 20. The first composite layer 19 and the second composite layer 20 are laminates made of composite material, such as CFRP for example. They are obtained by successive application of multiple composite tapes by the first robotic device and/or the second robotic device.

In a first step of a method according to the invention, the first robotic device and second robotic device may place composite components on the first mold and the second mold (the molds being not represented) so as to form at least the first composite layer 19.

In a second step, the first robotic device 21 and the second robotic device 22 and/or one or more operators may place one or more reinforcing components 16 on the first composite layer 19. In the example of figure 3, the reinforcing components 16 are placed in a peripheral rim 27 and transition zone 28 of the bulkhead. The transition zone 28 corresponds to the area of the bulkhead between a central area 29 and a peripheral rim 27, and in which the curvature radius of the bulkhead is small (high curvature). This transition zone 28 is submitted to loads during the use of the bulkhead, as this portion transmits loads between the central area 29 of the bulkhead and a peripheral rim 27 of the bulkhead 23 for its attachment to the fuselage, thereby replacing multiple assembly parts.

In a third step, the first robotic device and second robotic device may place composite components on the first mold and the second mold - in fact over the reinforcing components 16 and/or the first composite layer, so as to form a the second composite layer 20. The reinforcing components 16 are thereby encapsulated between the first composite layer 19 and the second composite layer 20, such that the bulkhead is integral in one-piece.

The second and third step may afterwards be repeated so as to form multiple composite layers with reinforcing elements inserted between the successive composite layers.

The composite part - in this example a bulkhead - may then be cured.

The bulkhead 23 comprises a peripheral rim 27 on its outer periphery. This peripheral rim 27 is generally cylindrical or conical. It also comprises a flat or high-radius convex central area 29 around its symmetry central point. Moreover, a method and device according to the invention allow to manufacture such bulkhead 23 in one-piece with a small radii curvature (high-curvature) transition zone 28 in between the central area 29 and the peripheral rim 27.

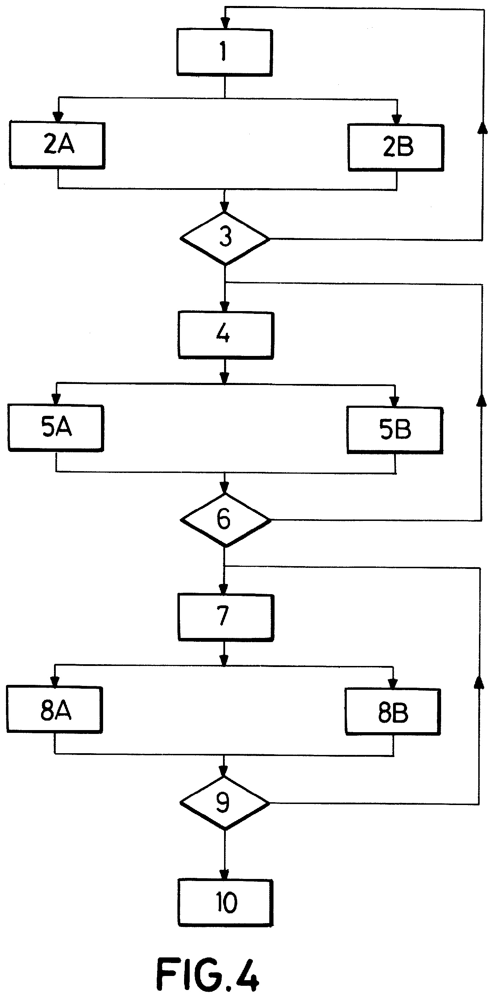

Figure 4 represents a process of manufacturing according to the invention with some more details.

In step 1, the frame supporting the first mold 11 and the second mold 12 rotates around a symmetry central point to a predetermined position.

In steps 2A and 2B, which may beneficially be simultaneous, the first robotic device 21 and the second robotic device 22 each place a composite component, such as a pre-impregnated CFRP tape for example, respectively on the first mold 11 and the second mold 12.

In step 3, the number of composite elements placed on the first mold and the second mold is compared to a predetermined value. As long as a first predetermined number of composite components to be placed is not reached, the steps 1, 2A, 2B, and 3 are repeated.

This first phase comprising multiple iterations of steps 1, 2A, 2B, and 3 may allow to create a first composite layer 19 on the first mold 11 and the second mold 12. In this first phase, the first mold 11 and the second mold 12 may be rotated to a new position at each new iteration of the step 1, if necessary.

Once the first predetermined number of composite components is placed on the first mold 11 and the second mold 12, the process proceeds with a second phase comprising steps 4, 5A, 5B and 6.

In a step 4, the frame supporting the first mold 11 and the second mold 12 rotates around a symmetry central point 15 to a predetermined position. This position is to allow the first robotic device 21 and the second robotic device 22 or an operator to place a reinforcing component 16 on the composite layer 19.

In steps 5A and 5B, which may or may not be simultaneous, a reinforcing component 16 is placed on the first mold 11 and the same reinforcing components 16 is placed - symmetrically around the symmetry central point 15 - on the second mold 12.

In a step 6, the number of reinforcing components 16 placed on the first mold 11 and the second mold 12 is compared to a predetermined value. As long as a predetermined number of reinforcing components 16 to be placed is not reached, the steps 4, 5A, 5B and 6 are repeated.

This second phase comprising multiple iterations of steps 4, 5A, 5B and 6 may allow to place multiple reinforcing components 16 on the first composite layer 19 so as to form a composite assembly. In this second phase, the first mold 11 and the second mold 12 may be rotated to a new position at each new iteration of the step 4, if necessary.

Once the predetermined number of reinforcing components is placed on the first mold 11 and the second mold 12, the process proceeds with a third phase comprising steps 7, 8A, 8B and 9 similar to steps 1, 2a, 2B and 3.

In step 7, the frame supporting the first mold 11 and the second mold 12 rotates around a symmetry central point to a predetermined position.

In steps 8A and 8B, which may beneficially be simultaneous, the first robotic device 21 and the second robotic device 22 each place a composite component, such as a pre-impregnated CFRP tape for example, respectively on the first mold 11 and the second mold 12.

In step 9, the number of composite elements placed on the first mold and the second mold is compared to a predetermined value. As long as a second predetermined number of composite components to be placed is not reached, the steps 7, 8A, 8B and 9 are repeated.

This third phase comprising multiple iterations of steps 7, 8A, 8B and 9 may allow to create a second composite layer 20 on the reinforcing components 16 and the first composite layer 19. In this third phase, the first mold 11 and the second mold 12 may be rotated to a new position at each new iteration of the step 7, if necessary.

Once the second predetermined number of composite components is placed on the composite assembly, the process proceeds with step 10.

In a further step 10, the composite assembly may be cured in order to provide mechanical cohesion to the composite assembly.

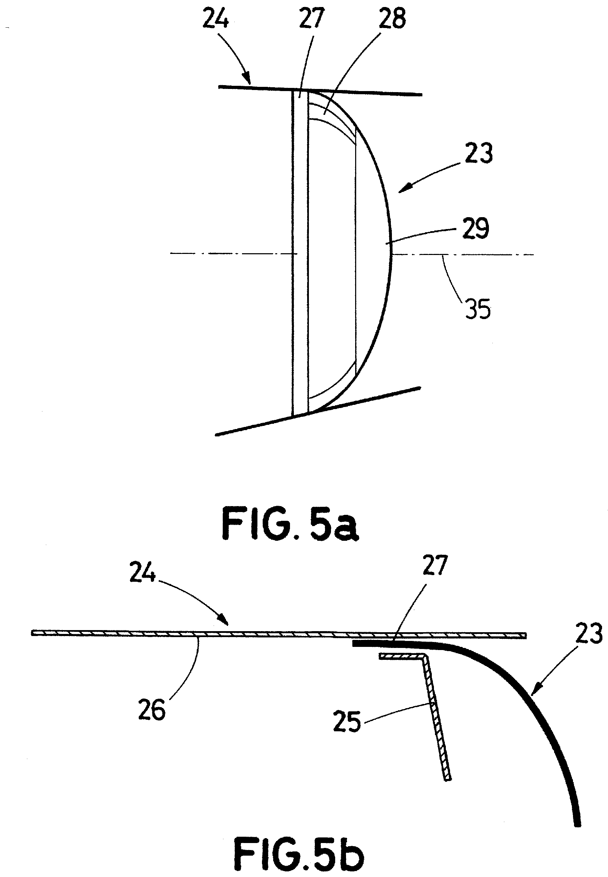

The figures 5a and 5b are representations for the understanding of the benefits obtained by a manufacturing method and device according to the invention to manufacture a one-piece bulkhead for an aircraft.

In figure 5a, a bulkhead 23 that may obtained by a method as described in relation with figure 4, for example by implementing said method on a device of figures 1 and 2, with the components of figure 3, is schematically represented in side-view, mounted in an aircraft's fuselage 24 in their final assembly position. Due to the manufacturing of such bulkhead 23 on a single mold, with small radii between its peripheral rim and its center, that can be reached and assembled as one-piece by rotating the molds 11, 12 around a symmetry central point 15, and due to the use of robotic arms, the bulkhead 23 may be assembled directly to the aircraft's fuselage 24 without or with a very limited number of intermediate parts. This invention thereby provides significant gains in manufacturing duration and complexity, as well as more interior space of an aircraft cabin (on the pressurized side of the bulkhead 23 which is on its concave side).

Figure 5b is a detail view of how the one-piece bulkhead 23 may be attached by its peripheral rim 27 to the frame 25 and skin 26 of the fuselage 24. The loads applied to the central area of the bulkhead by the pressure difference between its concave side and convex side are transmitted through the transition zone 28 to it peripheral rim 27 and thereby to the fuselage frame 25.

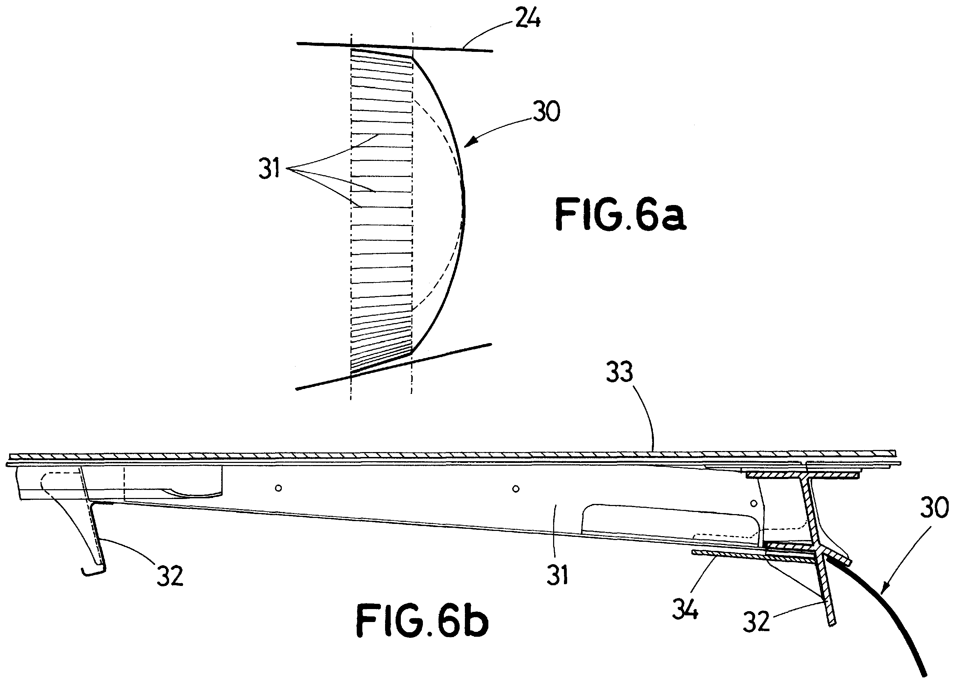

Figures 6a and 6b are a representation of a bulkhead of the prior art, here represented to offer a comparison standpoint with a one-piece bulkhead.

In figure 6a the bulkhead 30 is schematically represented in side-view, mounted in an aircraft's fuselage 24. The bulkheads 30 of the prior art only comprise a high radii curvature (small curvature) portion. This bulkhead 30 is attached to the fuselage through long gussets 31, distributed discretely around the fuselage 24. These gussets serve as a transition between the high radii bulkhead 30 and the conical fuselage 24. The installation of such gussets is long and complex. Moreover there weight is much higher than the peripheral rim 27 and transition zone 28 of the bulkhead presented in figures 3, 5a and 5b.

Figure 6b is a detail view of how the prior-art bulkhead 30 may be attached through the gussets 31 to the frame 32 and skin 33 of the fuselage 24. The frame 32 has a bigger size and project more inwardly in the fuselage compared to the frame 25 of figure 5b. Also, an additional part known as a tie 34 may be needed to join the gussets 31 to the frame 32. The loads of such bulkhead 30 are therefore transmitted to the fuselage 24 through the multiple gussets 31.

The invention is not limited to the specific embodiments herein disclosed as examples. The invention also encompasses other embodiments not herein explicitly described, which may comprise various combinations of the features herein described provided that they are encompassed by the scope of the appended claims. Said claims define the invention. In particular, although the invention has emerged in the context of manufacturing one-piece bulkheads for aircrafts, the device and method of the invention could be applied to the manufacturing of many other composite parts.

## Claims

1. Device (40) for manufacturing composite parts comprising:
- a first mold (11) mounted on a frame (13), said first mold (11) comprising a functional surface (17) adapted to receive components of a first composite part,
- a first robotic device (21) adapted to place at least a first component of the first composite part on the first mold (11),
- a second mold (12):
• mounted on the same frame (13) as the first mold (11),
• comprising a functional surface (18) adapted to receive components of a second composite part, the functional surface (18) of the second mold (12) being identical to the functional surface (17) of the first mold (11),
- a second robotic device (22) adapted to place at least a second component of the second composite part on the second mold (12), wherein the second mold is arranged in a central symmetric position around a symmetry central point (15) with regard to the first mold (11),
and in that the first robotic device (21) and the second robotic device (22) are adapted to perform the same operations simultaneously with a central symmetry relationship around the symmetry central point (15).

2. Device according to claim 1, further **characterized in that** the frame (13) is adapted to at least rotate the first mold (11) and the second mold (12) simultaneously, around at least one axis (14).

3. Device according to any of claim 1 or 2, further **characterized in that** the first robotic device (21) and the second robotic device (22) are adapted to move in relation to the frame (13).

4. Device according to any of claim 1 to 3, further **characterized in that** the first robotic device (21) and the second robotic device (22) each comprise a composite tape laying device.

5. Device according to any of claim 1 to 4, further **characterized in that** the first robotic device (21) and the second robotic device (22) each comprise a robotic arm.

6. Device according to any of claim 1 to 5, further **characterized in that** the first mold (11) and the second mold (12) have a convex functional surface (17, 18).

7. Device according to any of claim 1 to 6, further **characterized in that** the first mold (11) and the second mold (12) are adapted to form a bulkhead (23) for an aircraft's fuselage (24).

8. Device according to one of claim 1 to 7, further **characterized in that**:
- the functional surface (17) of the first mold (11) has a circumferential portion (28) with a curvature radius smaller than a curvature radius of a central portion (29),
- the frame (13) and the first robotic device (21) are adapted to lay composite tapes circumferentially on the circumferential portion (28) of the first mold (11).

9. Device according to one of claim 1 to 8, further **characterized in that** the first robotic device (21) and the second robotic device (22) are adapted to lay composite tapes having a width comprised between 0.7 and 7 centimeters.

10. Device according to one of claim 1 to 9, further **characterized in that** the first robotic device (21) and the second robotic device (22) are adapted to lay composite tapes respectively on the first mold (11) and second mold (12), then at least one reinforcing component of a different nature than the composite tapes respectively on the first mold (11) and second mold (12), and then composite tapes at least partially over said at least one reinforcing component respectively on the first mold (11) and second mold (12).

11. Method for the manufacturing of composite parts comprising:
- placing a first component of a first composite part on a first mold (11) with a first robotic device (21),
- placing a second component of a second composite part on a second mold (12) with a second robotic device (22):
• said second mold (12) having a functional surface (18) identical to a functional surface (17) of the first mold (11), and said first mold (11) and second mold (12) both being mounted on a same frame (13) in a central symmetric arrangement around a symmetry central point (15),
• symmetrically to the application of the first component on the first mold, (11) around the symmetry central point (15).

12. Method according to claim 11, further **characterized in that** a first component placed by the first robotic device (21) on the first mold (11) and a second component placed by the second robotic device (22) simultaneously on the second mold (12) are identical.

13. Method according to claim 12, further **characterized in that** it is a method for manufacturing an integral bulkhead (23) for an aircraft's fuselage (24).

## Patentansprüche

1. Vorrichtung (40) zur Herstellung von Verbundteilen, die Folgendes umfasst:
- eine erste Form (11), die auf einem Rahmen (13) montiert ist, wobei die erste Form (11) eine Funktionsfläche (17) umfasst, die dazu ausgelegt ist, Komponenten eines ersten Verbundteils aufzunehmen,
- eine erste Robotervorrichtung (21), die dazu ausgelegt ist, mindestens eine erste Komponente des ersten Verbundteils auf der ersten Form (11) zu platzieren,
- eine zweite Form (12):
• die auf dem gleichen Rahmen (13) wie die erste Form (11) montiert ist,
• die eine Funktionsfläche (18) umfasst, die dazu ausgelegt ist, Komponenten eines zweiten Verbundteils aufzunehmen, wobei die Funktionsfläche (18) der zweiten Form (12) identisch zu der Funktionsfläche (17) der ersten Form (11) ist,
- eine zweite Robotervorrichtung (22), die dazu ausgelegt ist, mindestens eine zweite Komponente des zweiten Verbundteils auf der zweiten Form (12) zu platzieren, wobei die zweite Form in einer zentralsymmetrischen Position um einen Symmetriemittelpunkt (15) in Bezug auf die erste Form (11) angeordnet ist,
und dadurch, dass die erste Robotervorrichtung (21) und die zweite Robotervorrichtung (22) dazu ausgelegt sind, die gleichen Operationen gleichzeitig mit einer Zentralsymmetriebeziehung um den Symmetriemittelpunkt (15) herum durchzuführen.

2. Vorrichtung nach Anspruch 1, ferner **dadurch gekennzeichnet, dass** der Rahmen (13) dazu ausgelegt ist, die erste Form (11) und die zweite Form (12) gleichzeitig um mindestens eine Achse (14) zumindest zu drehen.

3. Vorrichtung nach einem der Ansprüche 1 oder 2, ferner **dadurch gekennzeichnet, dass** die erste Robotervorrichtung (21) und die zweite Robotervorrichtung (22) dazu ausgelegt sind, sich in Relation zu dem Rahmen (13) zu bewegen.

4. Vorrichtung nach einem der Ansprüche 1 bis 3, ferner **dadurch gekennzeichnet, dass** die erste Robotervorrichtung (21) und die zweite Robotervorrichtung (22) jeweils eine Verbundbandlegevorrichtung umfassen.

5. Vorrichtung nach einem der Ansprüche 1 bis 4, ferner **dadurch gekennzeichnet, dass** die erste Robotervorrichtung (21) und die zweite Robotervorrichtung (22) jeweils einen Roboterarm umfassen.

6. Vorrichtung nach einem der Ansprüche 1 bis 5, ferner **dadurch gekennzeichnet, dass** die erste Form (11) und die zweite Form (12) eine konvexe Funktionsfläche (17, 18) aufweisen.

7. Vorrichtung nach einem der Ansprüche 1 bis 6, ferner **dadurch gekennzeichnet, dass** die erste Form (11) und die zweite Form (12) dazu ausgelegt sind, ein Schott (23) für einen Rumpf eines Flugzeugs (24) zu bilden.

8. Vorrichtung nach einem der Ansprüche 1 bis 7, ferner **dadurch gekennzeichnet, dass**:
- die Funktionsfläche (17) der ersten Form (11) einen Umfangsabschnitt (28) mit einem Krümmungsradius aufweist, der kleiner als ein Krümmungsradius eines Mittelabschnitts (29) ist,
- der Rahmen (13) und die erste Robotervorrichtung (21) dazu ausgelegt sind, Verbundbänder umlaufend auf dem Umfangsabschnitt (28) der ersten Form (11) abzulegen.

9. Vorrichtung nach einem der Ansprüche 1 bis 8, ferner **dadurch gekennzeichnet, dass** die erste Robotervorrichtung (21) und die zweite Robotervorrichtung (22) dazu ausgelegt sind, Verbundbänder mit einer Breite zwischen 0,7 und 7 Zentimetern abzulegen.

10. Vorrichtung nach einem der Ansprüche 1 bis 9, ferner **dadurch gekennzeichnet, dass** die erste Robotervorrichtung (21) und die zweite Robotervorrichtung (22) dazu ausgelegt sind, Verbundbänder jeweils auf der ersten Form (11) und der zweiten Form (12), dann mindestens eine Verstärkungskomponente einer anderen Art als die Verbundbänder jeweils auf der ersten Form (11) und der zweiten Form (12) und dann Verbundbänder zumindest teilweise über der mindestens einen Verstärkungskomponente jeweils auf der ersten Form (11) und der zweiten Form (12) abzulegen.

11. Verfahren zur Herstellung von Verbundteilen, das Folgendes umfasst:
- Platzieren einer ersten Komponente eines ersten Verbundteils auf einer ersten Form (11) mit einer ersten Robotervorrichtung (21),
- Platzieren einer zweiten Komponente eines zweiten Verbundteils auf einer zweiten Form (12) mit einer zweiten Robotervorrichtung (22):
• wobei die zweite Form (12) eine Funktionsfläche (18) aufweist, die identisch zu einer Funktionsfläche (17) der ersten Form (11) ist, und die erste Form (11) und die zweite Form (12) beide auf einem gleichen Rahmen (13) in einer zentralsymmetrischen Anordnung um einen Symmetriemittelpunkt (15) montiert sind,
• symmetrisch zur Aufbringung der ersten Komponente auf der ersten Form (11) um den Symmetriemittelpunkt (15) herum.

12. Verfahren nach Anspruch 11, ferner **dadurch gekennzeichnet, dass** eine erste Komponente, die durch die erste Robotervorrichtung (21) auf der ersten Form (11) platziert wird, und eine zweite Komponente, die durch die zweite Robotervorrichtung (22) gleichzeitig auf der zweiten Form (12) platziert wird, identisch sind.

13. Verfahren nach Anspruch 12, ferner **dadurch gekennzeichnet, dass** es ein Verfahren zum Herstellen eines integralen Schotts (23) für einen Rumpf eines Flugzeugs (24) ist.

## Revendications

1. Dispositif (40) pour fabriquer des pièces composites, comprenant :
- un premier moule (11) monté sur un cadre (13), ledit premier moule (11) comprenant une surface fonctionnelle (17) adaptée pour recevoir des composants d'une première pièce composite,
- un premier dispositif robotique (21) adapté pour placer au moins un premier composant de la première pièce composite sur le premier moule (11),
- un second moule (12) :
• monté sur le même cadre (13) que le premier moule (11),
• comprenant une surface fonctionnelle (18) adaptée pour recevoir des composants d'une seconde pièce composite, la surface fonctionnelle (18) du second moule (12) étant identique à la surface fonctionnelle (17) du premier moule (11),
- un second dispositif robotique (22) adapté pour placer au moins un second composant de la seconde pièce composite sur le second moule (12), dans lequel le second moule est agencé dans une position symétrique centrale autour d'un point central de symétrie (15) en ce qui concerne le premier moule (11),
et en ce que le premier dispositif robotique (21) et le second dispositif robotique (22) sont adaptés pour réaliser les mêmes opérations simultanément avec une relation de symétrie centrale autour du point central de symétrie (15).

2. Dispositif selon la revendication 1, **caractérisé en outre en ce que** le cadre (13) est adapté pour au moins faire tourner le premier moule (11) et le second moule (12) simultanément, autour d'au moins un axe (14).

3. Dispositif selon l'une quelconque de la revendication 1 ou 2, **caractérisé en outre en ce que** le premier dispositif robotique (21) et le second dispositif robotique (22) sont adaptés pour se mouvoir relativement au cadre (13).

4. Dispositif selon l'une quelconque de la revendication 1 à 3, **caractérisé en outre en ce que** le premier dispositif robotique (21) et le second dispositif robotique (22) comprennent chacun un dispositif de pose de bande composite.

5. Dispositif selon l'une quelconque de la revendication 1 à 4, **caractérisé en outre en ce que** le premier dispositif robotique (21) et le second dispositif robotique (22) comprennent chacun un bras robotique.

6. Dispositif selon l'une quelconque de la revendication 1 à 5, **caractérisé en outre en ce que** le premier moule (11) et le second moule (12) ont une surface fonctionnelle convexe (17, 18).

7. Dispositif selon l'une quelconque de la revendication 1 à 6, **caractérisé en outre en ce que** le premier moule (11) et le second moule (12) sont adaptés pour former une cloison (23) pour le fuselage (24) d'un aéronef.

8. Dispositif selon l'une de la revendication 1 à 7, **caractérisé en outre en ce que** :
- la surface fonctionnelle (17) du premier moule (11) a une portion circonférentielle (28) avec un rayon de courbure plus petit qu'un rayon de courbure d'une portion centrale (29),
- le cadre (13) et le premier dispositif robotique (21) sont adaptés pour poser des bandes composites circonférentiellement sur la portion circonférentielle (28) du premier moule (11).

9. Dispositif selon l'une de la revendication 1 à 8, **caractérisé en outre en ce que** le premier dispositif robotique (21) et le second dispositif robotique (22) sont adaptés pour poser des bandes composites ayant une largeur comprise entre 0,7 et 7 centimètres.

10. Dispositif selon l'une de la revendication 1 à 9, **caractérisé en outre en ce que** le premier dispositif robotique (21) et le second dispositif robotique (22) sont adaptés pour poser des bandes composites respectivement sur le premier moule (11) et le second moule (12), puis au moins un composant de renfort d'une nature différente de celle des bandes composites respectivement sur le premier moule (11) et le second moule (12), et puis des bandes composites au moins partiellement par-dessus ledit au moins un composant de renfort respectivement sur le premier moule (11) et le second moule (12).

11. Procédé pour la fabrication de pièces composites, comprenant :
- le placement d'un premier composant d'une première pièce composite sur un premier moule (11) avec un premier dispositif robotique (21),
- le placement d'un second composant d'une seconde pièce composite sur un second moule (12) avec un second dispositif robotique (22) :
• ledit second moule (12) ayant une surface fonctionnelle (18) identique à une surface fonctionnelle (17) du premier moule (11), et lesdits premier moule (11) et second moule (12) étant tous les deux montés sur un même cadre (13) en un agencement symétrique central autour d'un point central de symétrie (15),
• symétriquement à l'application du premier composant sur le premier moule, (11) autour du point central de symétrie (15).

12. Procédé selon la revendication **11, caractérisé en outre en ce qu'**un premier composant placé par le premier dispositif robotique (21) sur le premier moule (11) et un second composant placé par le second dispositif robotique (22) simultanément sur le second moule (12) sont identiques.

13. Procédé selon la revendication 12, **caractérisé en outre en ce qu'**il s'agit d'un procédé pour fabriquer une cloison intégrale (23) pour le fuselage (24) d'un aéronef .
